(19) Europäisches Patentamt
European Patent Office
Office européen des brevets

(11) EP 3 805 329 A1

(12) **EUROPEAN PATENT APPLICATION**
published in accordance with Art. 153(4) EPC

(43) Date of publication:
**14.04.2021 Bulletin 2021/15**

(21) Application number: **19814170.7**

(22) Date of filing: **29.05.2019**

(51) Int Cl.:
***C09J 5/06*** (2006.01) ***C09J 11/02*** (2006.01)
***C09J 133/00*** (2006.01) ***C09J 163/00*** (2006.01)
***C09J 171/02*** (2006.01) ***C09J 183/12*** (2006.01)

(86) International application number:
**PCT/JP2019/021379**

(87) International publication number:
**WO 2019/235332 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2018 JP 2018106702**
**15.01.2019 JP 2019004636**

(71) Applicant: **Cemedine Co., Ltd.**
**Tokyo 141-8620 (JP)**

(72) Inventors:
- **YANO Shingo**
  **Tokyo 141-8620 (JP)**
- **TOKITA Yu**
  **Tokyo 141-8620 (JP)**
- **HASHIMUKAI Hideharu**
  **Tokyo 141-8620 (JP)**
- **AKIMOTO Masato**
  **Tokyo 141-8620 (JP)**

(74) Representative: **Grünecker Patent- und Rechtsanwälte**
**PartG mbB**
**Leopoldstraße 4**
**80802 München (DE)**

# (54) ADHESION METHOD AND ADHESIVE AGENT

(57) Provided are a bonding method and an adhesive that can provide portability in a short time, a low elastic modulus immediately after thermal curing, and the relaxation of thermal strain. The bonding method is a method for bonding a first adherend and a second adherend different from the first adherend with an adhesive, the adhesive containing a crosslinkable silicon group-containing polyoxyalkylene-based polymer, a crosslinkable silicon group-containing (meth)acrylic polymer, and an epoxy resin, the method including an application step of applying the adhesive to at least one of the first adherend and the second adherend, a bonding step of bonding the second adherend to the first adherend with the adhesive to form a structure, and a heating step of heating the resulting structure to cure the adhesive, in which after the heating step, in the case where the structure is matured at ordinary temperature, the adhesive has a storage modulus that increases as the maturing time elapses.

[FIG. 1]

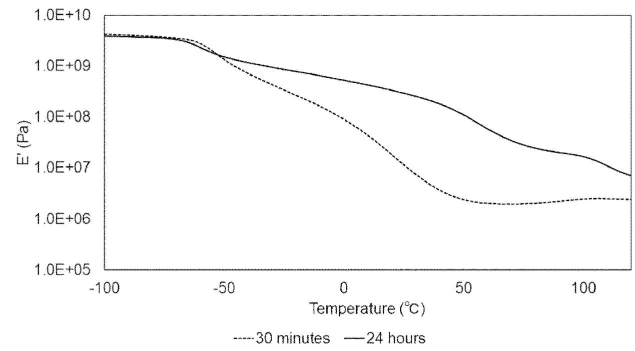


EP 3 805 329 A1

## Description

Technical Field

The present invention relates to bonding methods and adhesives. In particular, the present invention relates to a bonding method and an adhesive that can bond different adherends to each other.

Background Art

Hitherto, a two-component curable composition including a formulation A containing (A) a reactive silicon group-containing polyoxyalkylene-based polymer, (C) a curing agent for an epoxy resin, and (D) a silane coupling agent and a formulation B containing (E) an epoxy resin, (F) a condensation catalyst, and (G) water has been known (for example, see Patent Literature 1). According to the two-component curable composition described in Patent Literature 1, the two-component curable composition having improved storage stability and satisfactory internal curability can be obtained.

Citation List

Patent Literature

PTL 1: Japanese Unexamined Patent Application Publication No. 2002-309077

Summary of Invention

Technical Problem

However, in the two-component curable composition described in Patent Literature 1, no consideration is given to ensuring portability after the start of thermal curing and the relaxation of thermal strain remaining on an adherend due to curing by heating.

The present invention aims to provide a bonding method and an adhesive that can provide portability in a short time, a low elastic modulus immediately after thermal curing, and the relaxation of thermal strain.

Solution to Problem

To achieve the foregoing objects, the present invention provides a bonding method for bonding a first adherend and a second adherend different from the first adherend with an adhesive, the adhesive containing a crosslinkable silicon group-containing polyoxyalkylene-based polymer, a crosslinkable silicon group-containing (meth)acrylic polymer, and an epoxy resin, the method including an application step of applying the adhesive to at least one of the first adherend and the second adherend, a bonding step of bonding the second adherend to the first adherend with the adhesive to form a structure, and a heating step of heating the resulting structure to cure the adhesive, in which after the heating step, in the case where the structure is cured at ordinary temperature, the adhesive has a storage modulus that increases as the curing time elapses.

Advantageous Effects of Invention

According to the bonding method and the adhesive of the present invention, it is possible to provide to provide the bonding method and the adhesive that can provide portability in a short time, a low elastic modulus immediately after thermal curing, and the relaxation of thermal strain.

Brief Description of Drawings

[Fig. 1] Fig. 1 is a graph illustrating a change in the storage modulus of an adhesive according to Example 1 with a maturing time at ordinary temperature after a heating step. Description of Embodiments

<Outline of Bonding Method>

A bonding method according to the present invention is a method for bonding a first adherend and a second adherend different from the first adherend to each other with a predetermined adhesive. The predetermined adhesive according to the present invention contains a crosslinkable silicon group-containing polyoxyalkylene-based polymer, a

crosslinkable silicon group-containing (meth)acrylic polymer, and an epoxy resin. The adhesive according to the present invention has the following properties: After the adhesive is applied to the first adherend and/or the second adherend and heated, the adhesive has adhesiveness and flexibility immediately after the heating until the adhesive reaches ordinary temperature (23°C). After the adhesive reaches ordinary temperature subsequent to the heating, the adhesive gradually hardens as the maturing time elapses at room temperature while maintaining adhesiveness, finally forming a cured product having sufficient hardness. After the adherends reach ordinary temperature subsequent to the heating, a reheating step may be included as long as the adhesive has flexibility sufficient to follow the thermal strain of the first adherend and/or the second adherend. Here, the flexibility sufficient to follow the thermal strain refers to flexibility sufficient to follow the thermal strain due to heating for curing the adhesive and heating in a production process of a product and does not indicate that the final cured product does not have the ability to follow thermal strain during use of a manufactured article.

According to the bonding method and the adhesive of the present invention, when the first adherend and the second adherend are bonded to each other with the adhesive, a sufficient adhesion force is exhibited in a short time. Thus, a structure in which the first adherend and the second adherend are bonded together can be quickly provided to the next step. The adhesive according to the present invention gradually hardens as the curing time elapses (in other words, the storage modulus increases). This can relax the thermal strain caused by cooling the first adherend and/or the second adherend even when the coefficient of linear expansion of the material of the first adherend differs from the coefficient of linear expansion of the material of the second adherend. Therefore, according to the bonding method and the adhesive of the present invention, when the first adherend and the second adherend are bonded together, it is possible to suppress the warpage or the like of the first adherend and/or the second adherend due to thermal strain.

<Details of Bonding Method>

The bonding method according to the present invention is a method for bonding an adherend (first adherend) to another adherend (second adherend) different from the adherend with the adhesive according to the present invention. Specifically, the bonding method includes an application step of applying the adhesive to at least one of the first adherend and the second adherend, a bonding step of bonding the second adherend to the first adherend with the adhesive to form a structure, and a heating step of heating the resulting structure to a predetermined temperature to cure the adhesive.

(Application Step)

In the application step, the adhesive is applied to at least one of a region of the first adherend to which the adhesive is to be applied and/or a region of the second adherend to which the adhesive is to be applied. A method for application of the adhesive is not particularly limited. A conventionally known application method can be selected. An example thereof is a method in which an adhesive is discharged from a predetermined dispenser. An atmosphere, temperature, and humidity in the application step are not particularly limited. The adhesive can be applied in air at ordinary temperature.

The adhesive of the present invention preferably has shape retainability as described below and anti-dripping properties. Preferably, the adhesion can be applied to at least one of the first adherend and the second adherend so as to have a predetermined thickness (for example, 0.1 mm or more), the predetermined thickness can be maintained even after bonding.

(Bonding Step)

The bonding step is a step of bonding the first adherend and the second adherend to each other with the adhesive to form a structure of first adherend/adhesive/second adherend. For example, in the case of applying the adhesive to the first adherend, the second adherend is stacked thereon. In the case of applying the adhesion to the second adherend, the first adherend is stacked thereon. When the first adherend and the second adherend are bonded together, a certain adhesive thickness is preferably maintained after the bonding. In the case where the certain adhesive thickness is maintained, the adhesive can more preferably follow the thermal strain. Examples of a method for maintaining the certain adhesive thickness after the bonding include adding a filler having a intended particle size to the adhesive; and a method in which the first adherend and/or the second adherend having a shape capable of maintaining the thickness is used. Additionally, after the first adherend and the second adherend are stacked, the first adherend and/or the second adherend may be pressed in directions to approach each other. This can adjust the thickness of the adhesive between the first adherend and the second adherend. For example, the thickness of the adhesive of the structure after the bonding step may be 0.05 mm or more or 0.1 mm or more.

(Heating Step)

The heating step is a step of heating the structure at a predetermined temperature for a predetermined time to cure the adhesive. The heating temperature can be appropriately set in accordance with the curing temperature of the adhesive. The heating temperature can be appropriately determined in accordance with an adhesive used and the purpose, such as shortening the production process of a product. For example, the heating temperature is preferably 50°C or higher, also preferably 80°C or higher, and preferably 120°C or lower, more preferably 100°C or lower. In the case where the adhesive contains water, the heating temperature may be 120°C or lower. The heating temperature is preferably 100°C or lower from the viewpoint of preventing foaming of the adhesive. An atmosphere during the heating and a heating method are not particularly limited. The heating can be performed in a predetermined heating furnace, by a method in which the structure is placed on a hot plate and then heated, or with a hot-air generator.

The bonding method according to the present invention may further include, after the heating step, a cooling step of cooling the structure to ordinary temperature and/or after cooling the structure to ordinary temperature, a maturing step of performing maturing at ordinary temperature. In the cooling step, the curing of the adhesive proceeds between the first adherend and the second adherend. In the present invention, the adhesive immediately after the heating step exhibits sufficient adhesiveness and also has predetermined flexibility. After the heating step, for example, in the cooling step of cooling the structure to room temperature in an ordinary temperature environment, the hardness (storage modulus) of the adhesive increases gradually; thus, the thermal strain of the structure is relaxed in this step. Furthermore, maturing the structure in the ordinary temperature environment maintains and improves the adhesiveness of the adhesive, relaxes the strain, and improves the hardness.

(First Adherend and Second Adherend)

The first adherend and the second adherend are composed of the same material or different materials from each other. In the case where the first adherend and the second adherend are composed of different materials from each other, the coefficient of linear expansion of the material of the first adherend and the coefficient of linear expansion of the material of the storage modulus are different from each other. The shapes of the first adherend and the second adherend are not particularly limited and may be shapes corresponding to various components, such as electrical/electronic components, mechanical components, and automotive components. In the present invention, the adhesive can suppress the thermal strain. Accordingly, when the material of the first adherend is different from the material of the second adherend, the bonding method and the adhesive according to the present invention can be preferably used.

The first adherend can be mainly composed of, for example, a metal material, such as aluminum, iron, titanium, or stainless steel. The second adherend can be mainly composed of, for example, a resin material or a carbon fiber-reinforced plastic material. The first adherend and the second adherend may be composed of materials different from the above materials.

<Details of Adhesive>

The adhesive according to the present invention contains a crosslinkable silicon group-containing polyoxyalkylene-based polymer, a crosslinkable silicon group-containing (meth)acrylic polymer, and an epoxy resin. Preferably, the adhesive according to the present invention further contains a porous additive.

Although the bonding method of the present invention includes the step of heating the adhesive for curing, the adhesive need not be an adhesive that does not cure unless subjected to the heating step, and the adhesive may be an adhesive that can be sufficiently cured in an ordinary temperature environment. In the case of using the adhesive that can be sufficiently cured in an ordinary temperature environment, the adhesive is preferably such that the curing of the adhesive is promoted in the heating step.

(Crosslinkable Silicon Group-Containing Polyoxyalkylene-Based Polymer)

The crosslinkable silicon group of the crosslinkable silicon group-containing polyoxyalkylene-based polymer is a group that contains a hydroxy group or hydrolyzable group attached to the silicon atom and that can form a siloxane bond to crosslink. An example of the crosslinkable silicon group is a group represented by general formula (1).

[Chem. 1]

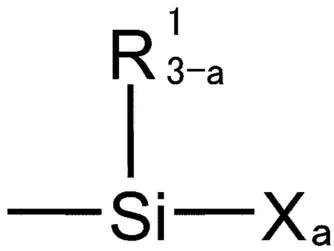

···(1)

In formula (1), $R^1$ is an organic group. $R^1$ is preferably a hydrocarbon group having 1 to 20 carbon atoms. Among these, $R^1$ is particularly preferably a methyl group. $R^1$ may have a substituent. When two or more $R^1$ groups are present, the $R^1$ groups may be the same or different. X is a hydroxy group or a hydrolyzable group. When two or more X groups are present, the X groups may be the same or different. a is an integer of 0, 1, 2, or 3. To provide an adhesive having a sufficient curing rate in view of curability, in formula (1), a is preferably 2 or more, more preferably 3. To provide an adhesive having sufficient flexibility, a is preferably 2.

One to three hydrolyzable and/or hydroxy groups can be bonded to one silicon atom. When hydrolyzable groups and hydroxy groups are attached in the crosslinkable silicon group in the range of two or more groups, they may be the same or different.

The hydrolyzable group denoted by X is not particularly limited. Examples thereof include a hydrogen atom, halogen atoms, alkoxy groups, acyloxy groups, ketoxymate groups, amino groups, amide groups, acid amide groups, mercapto groups, aminooxy group, and alkenyloxy groups. Among these, alkoxy groups are preferred from the viewpoint of achieving good handleability because of their mild hydrolyzability. Among alkoxy groups, groups having fewer carbon atoms are more reactive, in other words, more carbon atoms results in lower reactivity, for example, in the order of methoxy group > ethoxy group > propoxy group. The alkoxy group can be selected in accordance with the purposes and applications. Usually, a methoxy group or an ethoxy group is used.

Examples of the crosslinkable silicon group include trialkoxysilyl groups, such as a trimethoxysilyl group and a triethoxysilyl group; dialkoxysilyl groups, such as $-Si(OR)_3$, a methyldimethoxysilyl group, and a methyldiethoxysilyl group; and $-SiR^1(OR)_2$. Here, each R is an alkyl group, such as a methyl group or an ethyl group. These crosslinkable silicon groups may be used alone or in combination of two or more. Such a crosslinkable silicon group may be attached to a main chain, a side chain, or both. The crosslinkable silicon group is preferably present at an end of the molecular chain from the viewpoint of achieving excellent physical properties, such as tensile properties, of the cured product of the adhesive. In the crosslinkable silicon group-containing polyoxyalkylene-based polymer, the number of the crosslinkable silicon groups present in one molecule of the organic polymer is preferably 1.0 or more and 5 or less, more preferably 1.1 to 3, on average.

Examples of the main chain skeleton of the crosslinkable silicon group-containing polyoxyalkylene-based polymer include polyoxyalkylene-based polymers, such as polyoxypropylene, polyoxytetramethylene, and polyoxyethylene-polyoxypropylene copolymers.

The polyoxyalkylene-based polymer is a polymer having a repeating unit represented by general formula (2).

$$-R^2-O- \qquad (2)$$

In general formula (2), $R^2$ may be a divalent organic group having 1 to 20 carbon atoms and is preferably, for example, a linear or branched alkylene group having 1 to 14 carbon atoms, more preferably a linear or branched alkylene group having 1 to 14 carbon atoms, even more preferably a linear or branched alkylene group having 2 to 4 carbon atoms.

Specific examples of the repeating unit represented by general formula (2) include $-CH_2O-$, $-CH_2CH_2O-$, $-CH_2CH(CH_3)O-$, $-CH_2CH(C_2H_5)O-$, $-CH_2C(CH_3)_2O-$, and - $CH_2CH_2CH_2CH_2O-$. The main chain skeleton of the polyoxyalkylene-based polymer may be composed of only a single type of repeating unit or two or more types of repeating units. In particular, the main chain skeleton is preferably composed of a polymer mainly containing oxypropylene. Additionally, the main chain skeleton may have a branched structure.

The molecular weight of the crosslinkable silicon group-containing oxyalkylene-based polymer is not particularly limited. The number-average molecular weight is preferably 500 or more, preferably 1,000 or more, and preferably 100,000 or less, more preferably 70,000 or less in view of ease of workability. A higher molecular weight result in a higher viscosity of the polymer, thereby leading to a higher viscosity of the adhesive. Thus, a polymer partially containing a polymer having a number-average molecular weight of 20,000 or more is also preferred. The number-average molecular weight used in the present invention is a molecular weight in terms of polystyrene by gel permeation chromatography.

When the crosslinkable silicon group content of the polyoxyalkylene-based polymer is appropriately reduced, the crosslink density of the resulting cured product is reduced. Thus, the cured product has higher flexibility in the initial stage, lower modulus properties, and higher elongation properties at break. The number of the crosslinkable silicon groups in the polyoxyalkylene-based polymer is, on average, preferably 1.2 or more and 2.8 or less, more preferably 1.3 or more and 2.6 or less, even more preferably 1.4 or more and 2.4 or less in one molecule of the polymer. When the number of the crosslinkable silicon group contained in the molecule is less than one, the curability is insufficient. When the number is excessively large, an excessively dense network structure is formed to fail to exhibit satisfactory mechanical properties. In the case of a divalent polymer having a linear main chain skeleton, the number of the crosslinkable silicon groups in the polymer is, on average, preferably 1.2 or more and less than 1.9, more preferably 1.25 or more and 1.8 or less, even more preferably 1.3 or more and less than 1.7 in one molecule of the polymer.

The main chain skeleton of the polyoxyalkylene-based polymer can be synthesized, for example, by ring-opening polymerization of a monoepoxide in the presence of an initiator and a catalyst.

Examples of the initiator include divalent and polyvalent alcohols and various hydroxy group-containing oligomers, such as ethylene glycol, propylene glycol, butanediol, hexamethylene glycol, methallyl alcohol, bisphenol A, hydrogenated bisphenol A, neopentyl glycol, poly(butadiene) diol, diethylene glycol, triethylene glycol, poly(ethylene glycol), poly(propylene glycol), polypropylene triol, polypropylene tetraol, dipropylene glycol, glycerol, trimethylolmethane, trimethylolpropane, and pentaerythritol.

Examples of the monoepoxide include alkylene oxides, such as ethylene oxide, propylene oxide, α-butylene oxide, β-butylene oxide, hexene oxide, cyclohexene oxide, styrene oxide, and α-methylstyrene oxide; alkyl glycidyl ethers, such as methyl glycidyl ether, ethyl glycidyl ether, isopropyl glycidyl ether, and butyl glycidyl ether; allyl glycidyl ethers; and allyl glycidyl ethers.

Examples of the catalyst that can be used include alkali catalysts, such as KOH and NaOH; acidic catalysts, such as boron trifluoride etherate; aluminoporphyrin metal complexes and double metal cyanide complexes, such as a cobalt zinc cyanide-glyme complex catalyst.

Examples of the method for synthesizing the polyoxyalkylene-based polymer include, but are not particularly limited to, a polymerization method in the presence of an alkali catalyst, such as KOH; and a polymerization method in the presence of a double metal cyanide complex catalyst. In the case of the polymerization method in the presence of the double metal cyanide complex catalyst, the polyoxyalkylene-based polymer having a high number-average molecular weight of 6,000 or more, a Mw/Mn of 1.6 or less, and a narrow molecular weight distribution can be prepared with only a small number of side reactions.

In addition, the main chain skeleton of the polyoxyalkylene-based polymer can also be obtained, for example, by chain extension of a hydroxy-terminated polyoxyalkylene polymer with a bi- or higher-functional alkyl halide, such as $CH_2Cl_2$ or $CH_2Br_2$, in the presence of a basic compound, such as KOH, NaOH, $KOCH_3$, or $NaOCH_3$. For example, a method for extending the chain of a hydroxy-terminated polyoxyalkylene polymer with a bi- or tri-functional isocyanate compound is also exemplified.

A method for introducing the crosslinkable silicon group into the polyoxyalkylene-based polymer is not particularly limited, and various methods can be employed. For example, the crosslinkable silicon group can be introduced into the polyoxyalkylene-based polymer by allowing a polyoxyalkylene-based polymer having a functional group, such as an unsaturated group, a hydroxy group, an epoxy group, or an isocyanate group, in its molecule to react with a functional group reactive with the relevant functional group and the crosslinkable silicon group. For example, preferred is a method in which a polyoxyalkylene-based polymer having an unsaturated group represented by general formula (3) or (4) at a terminus in one molecule is reacted with a crosslinkable silicon group-containing compound represented by general formula (5) in the presence of a group VIII transition metal catalyst.

$$CH_2=CH-R^3-O- \qquad (3)$$

$$CH_2=C(R^4)-R^3-O- \qquad (4)$$

In the formulae, each $R^3$ is a divalent organic group having 1 to 20 carbon atoms, and $R^4$ is a hydrocarbon group having 10 or less carbon atoms.

$$H-[Si(R^5_{2-b})(X_b)O]_mSi(R^6_{3-a})X_a \qquad (5)$$

$R^5$ and $R^6$ are the same or different and are each an alkyl group having 1 to 20 carbon atoms, an aryl group having 6 to 20 carbon atoms, an aralkyl group having 7 to 20 carbon atoms, or a triorganosiloxy group represented by $(R')_3SiO$-. When two or more $R^5$ or $R^6$ groups are present, they may be the same or different. Each R' is a monovalent hydrocarbon group having 1 to 20 carbon atoms. Three R' groups may be the same or different. Each X is a hydroxy group or a hydrolyzable group. When two or more X groups are present, they may be the same or different. a is 0, 1, 2,

or 3, b is 0, 1, or 2, and a + $\sum$ b $\geq$ 2 is satisfied. In the m -Si($R^5_{2-b}$)($X_b$)-O- groups, b may be the same or different. m is an integer of 0 to 19.

The following may also be used: for example, the addition of a crosslinkable silicon group-containing isocyanate compound to a hydrogen-terminated polyoxyalkylene polymer; the reaction between an isocyanate group-terminated polyoxyalkylene polymer and a crosslinkable silicon group-containing amine compound; or the reaction between an isocyanate group-terminated polyoxyalkylene polymer and a crosslinkable silicon group-containing mercaptan compound. In other words, the main chain skeleton of the polyoxyalkylene-based polymer may contain another component, such as a urethane linkage component. An example of the urethane linkage component is a component obtained by the reaction between an aromatic polyisocyanate, such as toluene (tolylene) diisocyanate or diphenylmethane diisocyanate, or an aliphatic polyisocyanate, such as isophorone diisocyanate, and a hydroxy group-containing polyoxyalkylene-based polymer.

An example of a method for producing a polyoxyalkylene-based polymer having the unsaturated group represented by general formula (3) or (4) at a terminus is a method in which a hydroxy-terminated polyoxyalkylene-based polymer is reacted with an unsaturated bond-containing compound to bond them with, for example, ether linkage, ester linkage, urethane linkage, or carbonate linkage. Thereby, for example, a crosslinkable silicon group-containing urethane (also referred to as a "silylated urethane") can be used as the crosslinkable silicon group-containing polyoxyalkylene-based polymer according to the present invention.

In the case of introducing an unsaturated group using ether linkage, for example, it is conceivable to employ a method in which a hydroxy terminus of the polyoxyalkylene polymer is converted into a metaloxy group -OM (M is, for example, Na or K) and then reacted with an unsaturated group-containing compound represented by general formula (6) or (7).

$$CH_2=CH-R^3-X^2 \qquad (6)$$

$$CH_2=C(R^4)-R^3-X^2 \qquad (7)$$

In each of the formulae, $R^3$ and $R^4$ are the same as above. $X^2$ is a halogen atom.

Examples of the unsaturated group-containing compound represented by general formula (6) or (7) include $CH_2=CH-CH_2-Cl$, $CH_2=CH-CH_2-Br$, $CH_2=CH-C_2H_4-Cl$, $CH_2=CH-C_2H_4-Br$, $CH_2=CH-C_3H_6-Cl$, $CH_2=CH-C_3H_6-Br$, $CH_2=C(CH_3)-CH_2-Cl$, $CH_2=C(CH_3)-CH_2-Br$, $CH_2=C(CH_2CH_3)-CH_2-Cl$, $CH_2=C(CH_2CH_3)-CH_2-Br$, $CH_2=C(CH_2CH(CH_3)_2)-CH_2-Cl$, and $CH_2=C(CH_2CH(CH_3)_2)-CH_2-Br$. In particular, $CH_2=CH-CH_2-Cl$ and $CH_2=C(CH_3)-CH_2-Cl$ are preferred from the viewpoint of reactivity.

The unsaturated group may be introduced by another method using an isocyanate compound, a carboxylic acid, or an epoxy compound containing a $CH_2=CH-CH_2-$ group or a $CH_2=C(CH_3)-CH_2-$ group.

Examples of the group VIII transition metal catalyst include one or more metal complex catalysts selected from the group consisting of group VIII transition metals, such as platinum, rhodium, cobalt, palladium, and nickel. Examples thereof include compounds, such as $H_2PtCl_6 \cdot 6H_2O$, platinum-vinylsiloxane complexes, platinum-olefin complexes, Pt metal, $RhCl(PPh_3)_3$, $RhCl_3$, $Rh/Al_2O_3$, $RuCl_3$, $IrCl_3$, $FeCl_3$, $PdCl_2 \cdot 2H_2O$, and $NiCl_2$. Among these, preferably, any one of $H_2PtCl_6 \cdot 6H_2O$, platinum-vinylsiloxane complexes, and platinum-olefin complexes is used from the viewpoint of hydrosilylation reactivity.

A single type of crosslinkable silicon group-containing polyoxyalkylene-based polymer may be used. Alternatively, two or more types thereof may be used.

(Crosslinkable Silicon Group-Containing (Meth)Acrylic Polymer)

The crosslinkable silicon group of the crosslinkable silicon group-containing (meth)acrylic polymer is the same as the crosslinkable silicon group of the crosslinkable silicon group-containing polyoxyalkylene-based polymer. An example of the (meth)acrylic polymer is a (meth)acrylic polymer having a substituent represented by general formula (8) (hereinafter, also referred to as a "(meth)acryloyl-based substituent") in its molecule (e.g., at a molecular end).

$$-O-C(=O)-C(R_7)=CH_2 \qquad (8)$$

In general formula (8), $R_7$ is a hydrogen atom or a hydrocarbon group having 1 to 20 carbon atoms.

(Introduction Method of Crosslinkable Silicon Group)

In the preparation of the (meth)acrylate polymer, various known methods can be used for the introduction of a crosslinkable silicon group into the (meth)acrylate polymer. Examples of an introduction method of a crosslinkable silicon

group include the following methods.

(1) A crosslinkable silicon group-containing unsaturated compound is copolymerized.
(2) Polymerization is performed with an initiator and a chain transfer agent having a crosslinkable silicon group.
(3) A (meth)acrylate polymer having a functional group, such as a hydroxy group, is allowed to react with a compound having another functional group, such as epoxysilane, capable of reacting with the relevant functional group and a crosslinkable silicon group.

Among these introduction methods of crosslinkable silicon groups, the method in which (1) an unsaturated compound having a crosslinkable silicon group is copolymerized is preferred in view of ease of the introduction of a crosslinkable silicon group. Additionally, a method in which the method (1) and the method (2) are employed in combination is also preferred. For example, a trimethoxysilyl group-containing (meth)acrylic polymer serving as a crosslinkable silicon group-containing methyl methacrylate-based polymer is obtained by a synthesis method according to Synthesis example 4 in WO2015-088021 with methyl methacrylate, 2-ethylhexyl methacrylate, 3-methacryloxypropyltrimethoxysilane, titanocene dichloride serving as a metal catalyst, 3-mercaptopropyltrimethoxysilane (acting as an initiator and a chain transfer agent due to the action of titanocene dichloride), and a benzoquinone solution serving as a polymerization terminator.

(Crosslinkable Silicon Group-Containing Unsaturated Compound)

As the crosslinkable silicon group-containing unsaturated compound used for copolymerization, a (meth)alkyl acrylate and vinylsilane containing a crosslinkable silicon group are preferred. Examples of the compound include γ-(meth)acryloxypropylalkoxysilanes, such as γ-(meth)acryloxypropyltrimethoxysilane, γ-(meth)acryloxypropylmethyldimethoxysilane, and γ-(meth)acryloxypropyltriethoxysilane; and vinylalkoxysilanes, such as vinyltriethoxysilane. Among these, preferred is a crosslinkable silicon group-containing (meth)alkyl acrylate whose alkyl group has 10 or less, preferably 3 or less carbon atoms.

(Another Monomer Other Than Crosslinkable Silicon Group-Containing Monomer Used for Synthesis of (Meth)Acrylate Polymer)

An example of another monomer other than a crosslinkable silicon group-containing monomer used for the synthesis of the (meth)acrylate polymer is a methyl methacrylate-based random copolymer having a repeating unit represented by general formula (9) and having methyl methacrylate as an essential monomer component.

$$-CH_2C(R^8)(COOR^9)- \qquad (9)$$

In general formula (9), $R^8$ is a hydrogen atom or a methyl group, and $R^9$ is an optionally substituted hydrocarbon group. The (meth)acrylate refers to acrylate and/or alkyl methacrylate.

As another monomer other than the crosslinkable silicon group-containing monomer or methyl methacrylate used for the synthesis of a polymer of (meth)acrylate, a (meth)alkyl acrylate is preferred. An alkyl (meth)acrylate whose alkyl group has 1 to 30 carbon atoms is more preferred. An alkyl (meth)acrylate whose alkyl group has 1 to 30 carbon atoms and which has no substituent is particularly preferred.

Examples of an alkyl (meth)acrylate compound include known compounds, such as methyl acrylate, ethyl (meth)acrylate, n-butyl (meth)acrylate, 2-ethylhexyl (meth)acrylate, lauryl (meth)acrylate, and stearyl (meth)acrylate.

From the viewpoint of providing excellent adhesiveness, an alkyl (meth)acrylate whose ester group has 8 or more carbon atoms, such as 2-ethylhexyl (meth)acrylate, lauryl (meth)acrylate, or stearyl (meth)acrylate, is preferred. From the viewpoint of imparting flexibility to a (meth)acrylate polymer, an alkyl (meth)acrylate having a glass transition temperature (Tg) of 0°C or lower, such as n-butyl acrylate (Tg: -55°C), 2-ethylhexyl acrylate (Tg: -70°C), or lauryl acrylate (Tg: -3°C), is preferably used. The term "glass transition temperature" described in this paragraph refers to the glass transition temperature of the homopolymer.

A hydrocarbon group, such as an alkyl group, in (meth)acrylate may have a substituent, such as a hydroxy group, an alkoxy group, a halogen atom, or an epoxy group. Examples of such a compound include hydroxy group-containing (meth)acrylates, such as hydroxyethyl (meth)acrylate, alkoxy group-containing (meth)acrylates, such as methoxyethyl (meth)acrylate, epoxy group-containing (meth)acrylates, such as glycidyl (meth)acrylate, and amino group-containing (meth)acrylates, such as diethylaminoethyl (meth)acrylate. An unsaturated compound (macromonomer or macromer) having a macromolecular chain composed of, for example, a polystyrene chain-containing acrylate can also be used.

The crosslinkable silicon group-containing methyl methacrylate-based polymer, which is a (meth)acrylate polymer, may contain a repeating unit originating from a compound copolymerizable with a (meth)acrylate compound in addition to a repeating unit originating from the (meth)acrylate compound. Examples of the compound copolymerizable with the (meth)acrylate compound include acrylic acids, such as (meth)acrylic acid; amide compounds, such as (meth)acrylamide; vinyl ether compounds, such as alkyl vinyl ethers; and other compounds, such as acrylonitrile, styrene, $\alpha$-methylstyrene, vinyl chloride, and vinyl acetate.

(Percentage of Monomer Used)

The amount of methyl methacrylate in the polymer of the (meth)acrylate polymer is less than 80% by weight, preferably 20% or more by mass, more preferably 30% or more by mass, even more preferably 40% or more by mass. The compound copolymerizable with the (meth)acrylate compound is preferably used in an amount of 20% or less by mass, more preferably 10% or less by mass, even more preferably 5% or less by mass in the (meth)acrylate polymer. However, in the case of using a macromonomer, the amount of the macromonomer in the polymer of the (meth)acrylate polymer is preferably 10% or less by mass, more preferably 5% or less by mass, particularly preferably 3% or less by mass.

(Glass Transition Temperature)

The (meth)acrylate polymer has a glass transition temperature (Tg) of 0°C or higher and 120°C or lower. The glass transition temperature is preferably 0°C or higher, more preferably 20°C or higher, even more preferably 40°C or higher, and preferably 120°C or lower, more preferably 100°C or lower, even more preferably 80°C or lower. A glass transition temperature of lower than 0°C results in a tendency to lead to a decrease in adhesive strength immediately after bonding. A glass transition temperature of higher than 120°C results in a tendency to increase the viscosity to make it difficult to apply the adhesive to an adherend. The glass transition temperature can be easily estimated using the Fox equation.

The (meth)acrylate polymer preferably has a weight-average molecular weight (molecular weight in terms of polystyrene measured by a GPC method) of 1,000 or more, more preferably 2,000 or more, even more preferably 3,000 or more, and preferably 20,000 or less, more preferably 10,000 or less, even more preferably 6,000 or less. A weight-average molecular weight of less than 1,000 results in a low initial adhesion force after the application. A weight-average molecular weight of more than 20,000 results in an excessively high viscosity during the application operation to deteriorate the workability. The polymer of the (meth)acrylate polymer is preferably solid at room temperature or preferably has a softening point of 80°C or higher determined by ball-and-ring method.

(Method for Preparing (Meth)Acrylate Polymer)

As a method for preparing the (meth)acrylate polymer, a radical polymerization can be employed. For example, it is possible to employ a common solution polymerization method or bulk polymerization method with a thermal polymerization initiator, such as benzoyl peroxide or azobisisobutyronitrile. It is also possible to employ a method of polymerization by irradiation with light or radiation with a photoinitiator. In a radical copolymerization, a chain transfer agent, such as lauryl mercaptan or 3-mercaptopropyltrimethoxysilane, may be used in order to adjust the molecular weight. It is also possible to employ the radical polymerization method with a thermal polymerization initiator. The polymer of the (meth)acrylate polymer according to the present invention can be easily prepared by such a method. Another polymerization method, such as a living radical polymerization method described in Japanese Unexamined Patent Application Publication No. 2000-086998, may be employed.

(Epoxy Resin)

As the epoxy resin, various epoxy resins may be used. Examples of the epoxy resins that can be used include, but are not particularly limited to, monomers, oligomers, and/or polymers having two or more epoxy groups in one molecule.

Examples of the epoxy resin include biphenyl-type epoxy resins; bisphenol-type epoxy resins, such as bisphenol A-type epoxy resins, bisphenol F-type epoxy resins, tetramethylbisphenol F-type epoxy resins, bisphenol E-type epoxy resins, bisphenol S-type epoxy resins, hydrogenated bisphenol A-type epoxy resins, bisphenol M-type epoxy resins (4,4'-(1,3-phenylenediisopridiene)bisphenol-type epoxy resins), bisphenol P-type epoxy resins (4,4'-(1,4- phenylenediisopridiene)bisphenol-type epoxy resins), and bisphenol Z-type epoxy resins (4,4'-cyclohexydienebisphenol-type epoxy resins); stilbene-type epoxy resins; novolac-type epoxy resins, such as phenol novolac-type epoxy resins, brominated phenol novolac-type epoxy resins, cresol novolac-type epoxy resins, and novolac-type epoxy resins having condensed aromatic hydrocarbon structures; polyfunctional epoxy resins, such as trihydroxyphenylmethane-type epoxy resins,

alkyl-modified trihydroxyphenonylmethane-type epoxy resins, and tetraphenylolethane-type epoxy resins; phenol aralkyl-type epoxy resins, such as phenylene skeleton-containing phenol aralkyl-type epoxy resins and biphenylene skeleton-containing phenol aralkyl-type epoxy resins; naphthalene skeleton-containing epoxy resins, such as dihydroxynaphthalene-type epoxy resins, naphthalenediol-type epoxy resins, bifunctional or tetrafunctional naphthalene dimer-type epoxy resins obtained by glycidyl etherification of the dimer of hydroxynaphthalene and/or dihydroxynaphthalene, naphthylene ether-type epoxy resins, binaphthyl-type epoxy resins, and naphthol aralkyl-type epoxy resins; anthracene-type epoxy resins; phenoxy-type epoxy resins; bridged cyclic hydrocarbon compound-modified phenol-type epoxy resins, such as dicyclopentadiene-modified phenol-type epoxy resins; norbornene-type epoxy resins; adamantane-type epoxy resins; fluorene-type epoxy resins; phosphorus-containing epoxy resins; alicyclic epoxy resins; aliphatic chain epoxy resins; bisphenol A novolac-type epoxy resins; bixylenol-type epoxy resins; heterocyclic epoxy resins, such as triglycidyl isocyanurate and monoallyl diglycidyl isocyanurate; glycidyl amines, such as N,N,N',N'-tetraglycidyl-m-xylenediamine, N,N,N',N'-tetraglycidylbisaminomethylcyclohexane, and N,N-diglycidylaniline; copolymers of glycidyl (meth)acrylate and an ethylenically unsaturated double bond-containing compound; and epoxy resins having butadiene structures. A modified epoxy resin having a siloxane bond, obtained by modifying an epoxy resin with, for example, an alkoxysilane or silsesquioxane, can also be used. Examples of the modified epoxy resin having a siloxane bond include an alkoxysilane-modified epoxy resin composition disclosed in Japanese Unexamined Patent Application Publication No. 2010-275411 and a silsesquioxane-modified epoxy resin disclosed in Japan Patent No. 5569703; and commercially available products, such as Compoceran E series and Compoceran SQ series, available from Arakawa Chemical Industries, Ltd.

These epoxy resins may be used alone or in combination of two or more. Among these, a dihydorxynaphthalene-type epoxy resin, a naphthalenediol-type epoxy resin, a bifunctional or tetrafunctional naphthalene dimer-type epoxy resin obtained by glycidyl etherification of the dimer of hydroxynaphthalene and/or dihydroxynaphthalene, a naphthylene ether-type epoxy resin, or a modified epoxy resin having a siloxane bond is preferably used from the viewpoint of achieving excellent heat resistance.

(Amount Mixed)

In the present invention, the epoxy resin is preferably contained in an amount of 10 parts by mass or more, more preferably 20 parts by mass or more, and 300 parts by mass or less, more preferably 200 parts by mass or less based on 100 parts by mass of the total of the crosslinkable silicon group-containing polyoxyalkylene-based polymer and the crosslinkable silicon group-containing (meth)acrylic polymer.

(Curing Agent for Epoxy Resin)

As a curing agent for the epoxy resin, conventionally known compounds can be widely used. In particular, a tertiary amine compound is preferably used.

Examples of the tertiary amine compound include alicyclic amines, such as N,N'-dimethylpiperazine; aliphatic aromatic amines, such as benzylmethylamine, 2-(dimethylaminomethyl)phenol, and 2,4,6-tris(dimethylaminomethyl)phenol; ether linkage-containing amines, such as morpholine and N-methylmorpholine; hydroxy group-containing amines, such as triethanolamine; modified amines, such as epoxy-modified amines obtained by the reaction of epoxy compounds with amines, Mannich-modified amines obtained by the reaction of amines with formalin and phenols, Michael addition-modified amines, and ketimine; and amine salts, such as the 2-ethylhexanoic acid salt of 2,4,6-tris(dimethylaminomethyl)phenol. Additionally, a strongly basic amidine compound having at least one tertiary amino group is also exemplified. Here, the amidine compound refers to a compound represented by general formula (10) below.

$$R^{10}N=CR^{11}-NR^{12}_2 \qquad (10)$$

(wherein $R^{10}$, $R^{11}$, and two $R^{12}$ groups are each independently a hydrogen atom or an organic group. $R^{10}$ and $R^{12}$ may form a ring structure in combination).

Examples thereof include imidazoles, such as 2-ethyl-4-methylimidazole; imidazolines, such as 2-methylimidazoline and 2-phenylimidazoline; cyclic amidines, such as 1,8-diazabicyclo[5,4,0]undecene-7 (DBU), 6-(dibutylamino)-1,8-diazabicyclo[5,4,0]undecene-7 (DBA-DBU), and 1,5-diazabicyclo[4,3,0]nonene-5 (DBN); and amidine salts, such as a DBU-phenol salt, a DBU-octanoic acid salt, a DBU-p-toluenesulfonic acid salt, and a DBU-phenol novolac resin salt. These tertiary amine compounds may be used alone or in combination of two or more.

From the viewpoint of a curing catalyst for the epoxy resin, a tertiary amine compound having active hydrogen is preferably used as the tertiary amine compound. Alternatively, a compound having active hydrogen is preferably used together with a tertiary amine compound. The active hydrogen is effective in improving the activity of the tertiary amine compound to increase the reaction rate. The effect of increasing the reaction rate is in the order of phenols > acid > alcohol. In the case where the compound having active hydrogen is used in combination with the tertiary amine compound,

the compound having active hydrogen may be added to the curing agent or the main compound. Preferably, the compound having active hydrogen is added to the curing agent. Examples of the compound having active hydrogen include phenolic hydroxy groups; alcoholic hydroxy groups; and acidic groups, such as a carboxy group or a sulfone group. The tertiary amine compounds having active hydrogen are also described in the specific examples of the foregoing tertiary amine compounds, such as 2-(dimethylaminomethyl)phenol and 2,4,6-tris(dimethylaminomethyl)phenol. Of these, 2,4,6-tris(dimethylaminomethyl)phenol is the most preferable tertiary amine compound. Examples of the compound having active hydrogen include phenols, such as alkylphenols; and carboxy group-containing compounds, such as tetrahydrophthalic acid.

In the case where 2,4,6-tris(dimethylaminomethyl)phenol is used as a curing agent for the epoxy resin, the compound is preferably added in a larger amount than 5 to 10 parts by mass, which is a typical amount added, based on 100 parts by mass of the epoxy resin (see page 537 of "Shin Epokishi Jushi (New Epoxy Resin)" (published May 10, Showa 60 (1985))). This is because the large amount of 2,4,6-tris(dimethylaminomethyl)phenol added results in an excellent storage modulus at a high temperature. Another curing agent for the epoxy resin may be added in addition to the large amount of 2,4,6-tris(dimethylaminomethyl)phenol.

The amount of the curing agent for the epoxy resin added is preferably 1 parts by mass or more and 60 parts by mass or less, more preferably 2 parts by mass or more and 50 parts by mass or less, even more preferably 4 parts by mass or more and 40 parts by mass or less based on 100 parts by mass of the epoxy resin. In particular, when 2,4,6-tris(dimethylaminomethyl)phenol is used, the amount added is preferably 10 parts by mass or more, more preferably 15 parts by mass or more based on 100 parts by mass of the epoxy resin.

(Porous Additive)

Preferably, the adhesive of the present invention further contains a porous additive. Examples of the porous additive include inorganic compound having pores (mesopores) and compounds having oil absorbency. For example, it is possible to use, as the porous additive, at least one compound selected from the group consisting of, for example, silica, aluminum hydroxide, magnesium hydroxide, barium sulfate, magnesium carbonate, and barium carbonate having a porous structure and/or oil absorbency. Examples of the shape of the porous additive may include, but are not particularly limited to, spherical shapes, crushed shapes, disc-like shapes, rod-like shapes, and fibrous shapes.

The surface of the porous additive may be physically or chemically subjected to hydrophilic treatment or hydrophobic treatment. In the case where the surface is subjected to hydrophobic treatment, preferred is a compound that has been chemically subjected to hydrophobic treatment and that has an oil absorption (specified amount according to JIS K5101) equal to or more than 50 ml/100 g. The use of the porous additive having the surface subjected to hydrophobic treatment improves adhesion to the crosslinkable silicon group-containing polyoxyalkylene-based polymer, the crosslinkable silicon group-containing (meth)acrylic polymer, and/or the epoxy resin, thereby improving the characteristics of the cured product, such as mechanical strength. By using the porous additive that has been chemically subjected to hydrophobic treatment and that has an oil absorption equal to or more than 50 ml/100 g, adhesion to the epoxy resin is improved, and coloration during thermal curing can also be suppressed. As the porous additive, for example, porous silica can be preferably used.

The apparent density of the porous additive is not particularly limited and is preferably 0.4 g/cm$^3$ or more, more preferably 0.4 g/cm$^3$ or more and 2.0 g/cm$^3$ or less. The apparent density refers to a density in which the density of the material of the porous additive and the space occupied by the pores (i.e., pore volume) are taken into account. From the viewpoint of achieving high mechanical strength of the porous additive, the apparent density is preferably 0.4 g/cm$^3$ or more.

The porous additive preferably has an average particle size of 0. 1 $\mu$m or more and 100 $\mu$m or less. From the viewpoint of maintaining good flowability of the adhesive, the porous additive preferably has an average particle size of 100 $\mu$m or less and 0.1 $\mu$m or more.

The porous additive preferably has a specific surface area of 100 m$^2$/g or more, more preferably 300 m$^2$/g, preferably 1,000 m$^2$/g or less, more preferably 700 m$^2$/g or less. From the viewpoint of maintaining appropriate amounts of oil supplied to other polymer and resin materials, the porous additive preferably has a specific surface area of 100 m$^2$/g or more. From the viewpoint of maintaining satisfactory flowability of the porous additive, the porous additive preferably has a specific surface area of 1,000 m$^2$/g or less.

The porous additive is preferably contained in an amount of 1 part by mass or more, more preferably 2 parts by mass or more, and preferably 50 parts by mass or less, more preferably 30 parts by mass or less in view of workability based on 100 parts by mass of the total of the crosslinkable silicon group-containing polyoxyalkylene-based polymer and the crosslinkable silicon group-containing (meth)acrylic polymer.

(Properties of Adhesive in Bonding Method)

The adhesive according to the present invention has the following properties: in the case where after the heating step in the bonding method of the present invention, the structure is matured at ordinary temperature (23°C, 50% RH), the adhesive according to the present invention has a storage modulus that increases as the maturing time elapses. That is, the adhesive of the present invention has the property that the storage modulus thereof after the heating step is lower than the storage modulus thereof after a lapse of a predetermined time after the heating step. The storage modulus can be measured with a dynamic viscoelastic measurement (DMA) apparatus (DMS6100, available from Seiko Instruments Inc.) under the conditions below.

(Condition for Measurement of Storage Modulus)

Measurement frequency: 1 Hz, measurement mode: tension, rate of temperature increase: 5 °C/min

Specifically, the adhesive has the property that the storage modulus of the adhesive until the structure is brought to ordinary temperature in an ordinary temperature environment after the heating step is lower than the storage modulus of the adhesive at ordinary temperature after the structure is matured for 24 hours in the ordinary temperature environment after the heating step.

Specifically, when a process including:

(1) heating the adhesive in order to cure the adhesive (heating step);
(2) after the heating step, allowing the adhesive to stand in an ordinary temperature environment until the adhesive is brought to ordinary temperature (for example, standing for 30 minutes);
(3) measuring the storage modulus of the adhesive when the adhesive reaches ordinary temperature (the storage modulus at this time is defined as storage modulus A);
(4) after the adhesive reaches ordinary temperature, the adhesive is allowed to stand in the ordinary temperature environment; and
(5) measuring the storage modulus again at 24 hours after the completion of the heating (the storage modulus at this time is defined as storage modulus B),

is performed, the adhesive has the property that the storage modulus A is lower than the storage modulus B.

Furthermore, the storage modulus of the adhesive at ordinary temperature after the structure is matured for 24 hours in an ordinary temperature environment after the heating step is preferably 1.5 or more times, more preferably 2.0 or more times the storage modulus of the adhesive until the structure is brought to ordinary temperature in the ordinary temperature environment after the heating step.

The time needed to bring the structure to ordinary temperature in the ordinary temperature environment is shorter than the time needed to mature the structure for 24 hours in the ordinary temperature environment after the heating step. That is, when the heating temperature in the heating step is, for example, about 120°C or lower, in particular, about 80°C or lower, it takes less than 24 hours to bring the structure to ordinary temperature in the ordinary temperature environment after the heating step.

In the case where the adhesive of the present invention is cured at 70°C to 100°C, preferably 80°C to 100°C for 30 minutes, the adhesive strength of the adhesive measured according to JIS K6850 is preferably 1 MPa or more, more preferably 3 MPa or more.

The adhesive of the present invention can have satisfactory storage modulus, satisfactory retention of elongation, satisfactory hot strength, and satisfactory moisture resistance.

Specifically, after the adhesive is cured by heating at 70°C to 100°C for 30 minutes and then matured in a 23°C, 50% RH environment for 24 hours, the storage modulus of the adhesive of the present invention measured according to JIS K7244-1 is 30 MPa or more, preferably 50 MPa or more, more preferably 100 MPa or more. The elongation of the adhesive of the present invention in a 23 °C environment measured according to JIS K6251 is 50% or more, preferably 100% or more. In the adhesive of the present invention, the retention of elongation measured in a -40°C (low temperature) environment with respect to the elongation in the 23°C environment is 20% or more, preferably 30% or more. The elongation and the retention can be calculated by setting values measured in a 23°C environment to 100%.

The hot strength of the adhesive of the present invention measured according to JIS K6850 is 3.0 MPa or more, preferably 5.0 MPa or more. The adhesive of the present invention has excellent moisture resistance and thus exhibits excellent moisture resistance as compared with at least urethane-based adhesives.

The adhesive of the present invention preferably has satisfactory shape retainability. When the adhesive has excellent shape retainability, the adhesive can be used in various work environments, for example, in the case of transferring an adherend to which the adhesive has been applied or in the case of maturing an adherend to which the adhesive has been applied while the adherend leans, which is preferred. In the present invention, having shape retainability indicates that the adhesive has a yield stress of 25 Pa or more. From the viewpoint of maintaining sufficient shape retainability, the yield stress is preferably 25 Pa or more, more preferably 30 Pa or more.

[Other Additives]

The adhesive of the present invention may further contain various additives, such as water, a tackifier, a bulking agent, a silane coupling agent, an extender, a plasticizer, a curing catalyst, a physical property modifier to improve tensile properties and so forth, a reinforcing agent, a colorant, a flame retarder, an anti-dripping agent, an antioxidant, an anti-aging agent, an ultraviolet absorber, a solvent, a perfume, a pigment, a dye, a filler, and a diluent, as needed, as long as the physical properties and so forth of the adhesive are not impaired.

(Water)

In the present invention, in the case where the adhesive is applied to an adherend so as to have a predetermined thickness (for example, 0.1 mm or more), a predetermined amount of water is preferably added to the adhesive.

(Tackifier)

Examples of the tackifier include terpene resins, phenolic resins, terpene-phenolic resins, rosin resins, and xylene resins. These tackifiers may be used alone or in combination of two or more.

(Bulking Agent)

Examples of the bulking agent include reinforcing bulking agents, such as fumed silica, precipitated silica, fused silica, silicic anhydride, and carbon black; bulking agents, such as calcium carbonate, magnesium carbonate, aluminum hydroxide, aluminum oxide, titanium oxide, diatomaceous earth, calcined clay, clay, talc, hardened titanium, bentonite, organic bentonite, iron(III) oxide, zinc oxide, active zinc oxide, and silas balloons; and fibrous fillers, such as asbestos, glass fibers, and filaments. These bulking agents may be used alone or in combination of two or more.

(Silane Coupling Agent)

Examples of the silane coupling agent include, but are not particularly limited to, epoxy group-containing silanes, such as γ-glycidoxypropyltrimethoxysilane, and β-(3,4-epoxycyclohexyl)ethyltrimethoxysilane; amino group-containing silanes, such as γ-aminopropyltrimethoxysilane and N-(β-aminoethyl)-γ-aminopropyltrimethoxysilane; ketimine-type silanes, such as N-(1,3-dimethylbutylidene)-3-(triethoxysilyl)-1-propanamine; mercapto group-containing silanes, such as γ-mercaptopropyltrimethoxysilane; vinyl-type unsaturated group-containing silanes, such as vinyltrimethoxysilane and γ-methacryloyloxypropyltrimethoxysilane; chlorine atom-containing silanes, such as γ-chloropropyltrimethoxysilane; isocyanate-containing silanes, such as γ-isocyanatopropyltriethoxysilane; alkylsilanes, such as decyltrimethoxysilane; and phenyl group-containing silanes, such as phenyltrimethoxysilane. Additionally, modified amino group-containing silanes obtained by allowing amino group-containing silanes to react with epoxy group-containing compounds, isocyanate group-containing compounds, or (meth)acryloyl group-containing compounds containing the silanes described above may be used. These silane coupling agents may be used alone or in combination of two or more.

(Plasticizer)

Examples of the plasticizer include phthalate esters, such as dioctyl phthalate; aliphatic dibasic acid esters, such as dioctyl adipate; glycol esters; aliphatic esters; phosphoric esters; polyester-based plasticizers; polyethers, such as poly(propylene glycol) and derivatives thereof; hydrocarbon-based plasticizers; chlorinated paraffins; and low-molecular-weight acrylate polymers. These plasticizers may be used alone or in combination of two or more.

(Curing Catalyst)

Examples of the curing catalyst include Si-F bond-containing silicon compounds and other curing catalysts.
As such a Si-F bond-containing silicon compound, various compounds containing Si-F bond-containing silicon group (hereinafter, also referred to as a "fluorosilyl group") can be used. Any of inorganic and organic Si-F bond-containing silicon compounds can be used. As the Si-F bond-containing silicon compound, fluorosilyl group-containing organic compounds are preferred. Fluorosilyl group-containing organic polymers are more preferred because of their high safety. From the viewpoint of achieving a low viscosity of compositions, fluorosilyl group-containing low-molecular-weight organic

silicon compounds are preferred.

Examples of the Si-F bond-containing silicon compound include fluorosilane described in WO2015-088021, a fluorosilyl group-containing compound described in WO2015-088021, and a fluorosilyl group-containing organic polymer described in WO2015-088021.

As other curing catalysts, known curing catalysts can be widely used without particular limitation. Examples thereof include organometallic compounds, amines, fatty acids, and organic acidic phosphoric ester compounds. A silanol condensation catalyst is preferably used. Examples of the silanol condensation catalyst include organotin compounds; dialkyltin oxides; reaction products and so forth of dibutyltin oxide and phthalate esters; titanate esters; organic aluminum compounds; chelate compounds, such as titanium tetraacetylacetonate; and bismuth salts of organic acids. However, the addition of such an organotin compound can cause an increase in the toxicity of the resulting composition, depending on the amount added. Thus, in the case of using the organotin compound as a curing catalyst, it is preferable to use the organotin compound within a range in which the object and effect of the present invention can be achieved.

(Anti-Dripping Agent)

As the anti-dripping agent, known anti-dripping agents can be widely used without particular limitation. Examples thereof include polyamide waxes; hydrogenated castor oil derivatives; metallic soaps, such as calcium stearate, aluminum stearate, and barium stearate; organic bentonite; silica; modified polyester polyols; inorganic thixotropic agents, such as asbestos powder; and organic thixotropic agents, such as fatty acid amides.

(Antioxidant)

Examples of the antioxidant include hindered phenolic compounds, butylhydroxytoluene, and butylhydroxyanisole. These antioxidants may be used alone or in combination of two or more.

(Pigment)

Examples of the pigment include inorganic pigments, such as carbon black, titanium dioxide, zinc oxide, ultramarine blue, iron red, lithopone, lead, cadmium, iron, cobalt, aluminum, and hydrochloride salts; and organic pigments, such as azo pigments and copper phthalocyanine pigments. These pigments may be used alone or in combination of two or more.

(Filler)

As the filler, a resin filler (fine resin powder), an inorganic filler, or a functional filler can be used. The filler may be surface-treated with, for example, a silane coupling agent, a titanium chelating agent, an aluminum coupling agent, a fatty acid, a fatty ester, or rosin. As a resin filler, a particulate filler composed of, for example, an organic resin can be used. For example, as the resin filler, organic fine particles composed of a poly(ethyl acrylate) resin, a polyurethane resin, a polyethylene resin, a polypropylene resin, a urea resin, a melamine resin, a benzoguanamine resin, a phenolic resin, an acrylic resin, or a styrene resin can be used.

(Diluent)

The adhesive of the present invention can also contain a diluent. Here, a solvent having a flash point (open cup) of 50°C or higher is referred to as a "diluent". The incorporation of the diluent can adjust the physical properties, such as viscosity. As the diluent, various diluents can be used. Examples of the diluent include various solvents, for example, saturated hydrocarbon-based solvents, such as n-paraffin and isoparaffin, $\alpha$-olefin derivatives, such as Linealene Dimer (trade name, available from Idemitsu Kosan Co., Ltd.), aromatic hydrocarbon-based solvents, alcoholic solvents, ester-based solvents, citrate esters, such as acetyl triethyl citrate, and ketone-based solvents.

[Method for Producing Adhesive]

A method for producing the adhesive is not particularly limited. For example, the adhesive can be produced by mixing the crosslinkable silicon group-containing polyoxyalkylene-based polymer, the crosslinkable silicon group-containing (meth)acrylic polymer, and the epoxy resin in predetermined amounts, and if necessary, mixing the porous additive and/or other compounding materials, and degassing and stirring the mixture. The mixing order of the components and other compounding materials is not particularly limited and can be appropriately determined. The adhesive can be a single-component type or two-component type, as needed.

[Effect of Embodiment]

In the bonding method according to the present invention, the crosslinkable silicon group-containing polyoxyalkylene-based polymer, the crosslinkable silicon group-containing (meth)acrylic polymer, and the epoxy resin are contained, and in the case where the adhesive is matured at ordinary temperature after the heating of the adhesive for curing, the adhesive has the property that the storage modulus thereof increases as the maturing time elapses. This can provide portability in a short time, a low elastic modulus immediately after thermal curing, and the relaxation of thermal strain.

EXAMPLES

The present invention will be further specifically described below using examples; however, these examples are set forth to illustrate the present invention, and the scope of the present invention is not limited thereto.

(Synthesis Example 1: Alkoxysilyl Group-Containing Methacrylate Resin)

As an alkoxysilyl group-containing methacrylate resin, a trimethoxysilyl group-containing (meth)acrylic polymer was synthesized. Specifically, a trimethoxysilyl group-containing (meth)acrylic polymer was prepared according to a method described in Synthesis example 4 of WO2015-088021 using 70.00 g of methyl methacrylate, 30.00 g of 2-ethylhexyl methacrylate, 12.00 g of 3-methacryloxypropyltrimethoxysilane, 0.10 g of titanocene dichloride serving as a metal catalyst, 8.60 g of 3-mercaptopropyltrimethoxysilane, and 20.00 g of a benzoquinone solution (95% solution in THF) serving as a polymerization terminator.

A solution of the resulting reaction product in ethyl acetate was heated at 105°C to determine the solid content. The solid content was found to be 70.5%. The molecular weight of the resulting polymer was measured by gel permeation chromatography (GPC) in terms of polystyrene. The weight-average molecular weight (Mw) was 4,000. The molecular-weight distribution (Mw/Mn) was 2.4. Furthermore, $^1$H-NMR measurement (measurement in $CDCl_3$ solvent with NMR 400 available from Shimadzu Corporation) revealed that two trimethylsilyl groups were contained in one molecule. The glass transition temperature was 61°C.

(Synthesis Example 2: Synthesis of Fluorinated Polymer)

Propylene oxide was reacted using, serving as an initiator, polyoxypropylenediol having a molecular weight of about 2,000 in the presence of a zinc hexacyanocobaltateglyme complex catalyst to prepare a hydroxy-terminated polyoxypropylene having a number-average molecular weight of 15,000. A solution of $NaOCH_3$ in methanol was added to the hydroxy-terminated polyoxypropylene polymer. Methanol was removed by evaporation. Allyl chloride was then added thereto to convert terminal hydroxy groups into allyl groups. Desalting and purification treatment were performed. Then methyldimethoxysilane, which is a hydrosilyl compound, was reacted in the presence of a platinum catalyst to prepare a polyoxyalkylene polymer (1) having a methydimethoxysilyl group at its terminus and 1.7 crosslinkable silicon groups per molecule on average.

A polyoxyalkylene-based polymer having a fluorosilyl group at its terminus (hereinafter, referred to as a "fluorinated polymer") was prepared according to a method described in Synthesis example 6 of Japanese Unexamined Patent Application Publication No. 2009-215330 using 2.4 g of $BF_3$-diethyl ether complex, 1.6 g of dehydrated methanol, 100 g of the polyoxyalkylene polymer (1) having a crosslinkable silicon group, and 5 g of toluene. The measurement of the $^1$H-NMR spectrum of the resulting fluorinated polymer (measurement in $CDCl_3$ solvent with NMR 400 available from Shimadzu Corporation) revealed that a peak (m, 0.63 ppm) corresponding to silylmethylene ($-CH_2-Si$) of the crosslinkable silicon group-containing polyoxyalkylene polymer (1) serving as a raw material disappeared and a broad peak appeared in a low magnetic field (0.7 ppm or greater).

(Synthesis Example 3: Synthesis of Modified Epoxy Resin Having Siloxane Bond)

First, 80 parts by mass of jER 828 (available from Mitsubishi Chemical Corporation), 100 parts by mass of KBM 403 (available from Shin-Etsu Chemical Co., Ltd.), 1 part by mass of Neostann U-810 (available from Nitto Kasei Co., Ltd.), and 10 parts by mass of ion-exchanged water were mixed. The mixture was heated to 50°C to 70°C and stirred for 30 minutes. The mixture was subjected to dehydration and dealcoholization treatment at 140°C for 2 hours. Then water and alcohol were removed at 140°C for 30 minutes under reduced pressure, thereby preparing a modified epoxy resin having a siloxane bond.

(Examples 1 and 2)

Mixing materials were mixed in mixing proportions given in Table 1 to prepare adhesives. Specifically, the materials for formulation A and formulation B were weighed and provided so as to have the mixing proportions given in Table 1. These were mixed and stirred, thereby preparing the adhesives according to Examples 1 and 2.

[Table 1]

| Material name | | | Example 1 | Example 2 |
|---|---|---|---|---|
| Adhesive | Formulation A | jER 828 | 30 | 30 |
| | | Neostann U-810 | 0.3 | 0.3 |
| | | Water | 0.5 | 0.5 |
| | | Sylophobic 200 | - | 5 |
| | Formulation B | Crosslinkable silicon group-containing (meth)acrylic polymer | 28 | 28 |
| | | SAX575 | 42 | 42 |
| | | Versamine EH 30 | 4 | 4 |
| | | KBM 603 | 2 | 2 |
| Evaluation | Tensile shear | 23°C (MPa) | 12.30 | 15.57 |
| | | Failure pattern | AF6TCF4 | CF |
| | | 110°C (MPa) | 2.41 | 7.12 |
| | | Failure pattern | TCF | TCF |

In Table 1, the amounts of the mixing materials were expressed in units of "parts by mass". Details of the mixing materials are listed below.

(Formulation A)

- jER 828: a bisphenol A-type epoxy resin (bis A-type EP), available from Mitsubishi Chemical Corporation
- Neostann U-810: dioctyltin dilaurate, available from Nitto Kasei Co., Ltd.
- Sylophobic 200: porous silica, available from Fuji Silysia Chemical Ltd.

(Formulation B)

- Crosslinkable silicon group-containing (meth)acrylic polymer: the polymer prepared in Synthesis example 1
- SAX575: a crosslinkable silicon group-containing polyoxyalkylene-based polymer, available from Kaneka Corporation
- Versamine EH 30: TAP (2,4,6-tris(dimethylaminomethyl)phenol), available from Cognis Corp.
- KBM 603: [3-(2-aminoethyl)aminopropyl]trimethoxysilane, available from Shin-Etsu Chemical Co., Ltd.

(Tensile Shear Measurement)

The adhesive according to Example 1 was applied to a first adherend composed of aluminum (A1100) having a purity of 99% or more at a size of 12.5 mm × 25 mm with a spacer having a thickness of 0.5 mm. A second adherend composed of aluminum (A1100) was attached thereto so as to sandwich the adhesive. In this state, the resulting assembly was cured at 80°C for 30 minutes and further matured at 23°C and 50 %RH for 7 days. Immediately after the maturing, the tensile lap-shear strength was measured at a test rate of 50 mm/min in a 23°C environment according to JIS K6850 "Determination of tensile lap-shear strength of rigid-to-rigid bonded assemblies". Furthermore, the tensile lap-shear strength in a 110°C environment was measured in the 110°C environment. Similarly, in Example 2, the measurement

was performed immediately after maturing.

The failure patterns at break were visually checked. In Table 1, AF denotes the interfacial failure of the adhesive. CF denotes the cohesion failure of the adhesive. TCF denotes the cohesion failure of the adhesive in the vicinity of an adherend. AxCy denotes the mixed failure of AF and CF, the percentage of AF being x, the percentage of CF being y (where x and y are positive numbers and satisfy x + y = 10). Similarly, AxTCFy denotes the mixed failure of AF and TCF, the percentage of AF being x, the percentage of TCF being y (where x and y are positive numbers and satisfy x + y = 10).

As can be seen from Table 1, the tensile lap-shear strength of the adhesive according to Example 2 was improved by the presence of the porous silica, compared with Example 1.

Fig. 1 is a graph illustrating a change in the storage modulus of the adhesive according to Example 1 with temperature. In Fig. 1, the horizontal axis indicates the temperature (°C), and the vertical axis indicates the storage modulus (Pa).

The storage modulus (E' (Pa)) of a test piece obtained by thermally curing the adhesive according to Example 1 at 80°C for 30 minutes and then allowing the resulting cured product to stand in an ordinary temperature environment for 30 minutes and the storage modulus (E' (Pa)) of a test piece obtained by thermally curing the adhesive at 80°C for 30 minutes and then allowing the resulting cured product to stand in an ordinary temperature environment for 24 hours were measured with a dynamic viscoelastic measurement (DMA) apparatus (DMS6100, available from Seiko Instruments Inc.) under the conditions below. The storage moduli were measured in the temperature range of - 100°C to 120°C. Fig. 1 illustrates the results. In Fig. 1, the graph of a dotted line indicates a change in the storage modulus of the test piece that had been allowed to stand for 30 minutes, and the graph of a solid line indicates a change in the storage modulus of the test piece that had been allowed to stand for 24 hours.

Measurement frequency: 1 Hz, measurement mode: tension, rate of temperature increase: 5 °C/min

As can be seen from Fig. 1, the storage modulus of the adhesive according to Example 1 was improved with increasing time that the adhesive was allowed to stand at least in the temperature range of about -50°C to about 120°C.

(Examples 3 to 9)

Mixing materials were mixed in mixing proportions given in Table 2 to prepare adhesives. Specifically, the materials for formulation A and formulation B were weighed and provided so as to have the mixing proportions given in Table 2. These were mixed and stirred, thereby preparing the adhesives according to Examples 3 to 9.

[Table 2]

| | | | Example | | | | | | |
|---|---|---|---|---|---|---|---|---|---|
| | | | 3 | 4 | 5 | 6 | 7 | 8 | 9 |
| Adhesive | Formulation A | jER 828 | 30 | 30 | 30 | 30 | 30 | 30 | 30 |
| | | Neostann U-810 | 0.3 | 0.3 | 0.3 | 0.3 | 0.3 | 0.3 | - |
| | | Fluorinated polymer | - | - | - | - | - | - | 0.8 |
| | | KBM 403 | - | - | - | - | - | - | 1 |
| | | Water | 0.5 | 0.5 | 0.5 | 0.5 | 0.5 | 0.5 | 0.5 |
| | | Sylophobic 200 | | | | | | | |
| | | Crosslinkable silicon group-containing (meth)acrylic polymer | 28 | 21 | 14 | 7 | - | 28 | 28 |
| | | SAX575 | 42 | 49 | 56 | 63 | 70 | - | - |
| | | SPUR + 1050MM | - | - | - | - | - | 42 | 42 |
| | | Versamine EH 30 | 4 | 4 | 4 | 4 | 4 | 4 | 4 |
| | | KBM 603 | 2 | 2 | 2 | 2 | 2 | 2 | 2 |
| Evaluation | Dumbbell | Breaking strength (MPa) | 12.7 | 11.1 | 10.2 | 8.4 | 7.6 | 9.8 | 9.5 |
| | | Elongation (%) | 143 | 210 | 230 | 230 | 250 | 180 | 306 |
| | Storage modulus at 23°C (MPa) | | 639 | 360 | 175 | 76 | 33 | - | 320 |

In Table 2, the amounts of the mixing materials were expressed in units of "parts by mass". Although details of the mixing materials are listed below, the explanation is omitted for the same compounds as the mixing materials described in Table 1.

(Formulation A)

- Fluorinated polymer: the fluorinated polymer prepared in Synthesis example 2.
- KBM 403: (3-glycidoxypropyltrimethoxysilane), available from Shin-Etsu Chemical Co., Ltd

(Formulation B)

- Crosslinkable silicon group-containing (meth)acrylic polymer: the polymer prepared in Synthesis example 1
- SAX575: a crosslinkable silicon group-containing polyoxyalkylene-based polymer, available from Kaneka Corporation
- SPUR + 1050MM: a silylated urethane polymer, available from Momentive Performance Materials

(Breaking Strength, Elongation Measurement, and Storage Modulus)

The adhesive according to Example 3 was uniformly charged into a mold having a depth of 2 mm, cured at 80°C for 30 minutes, and further matured in a 23°C, 50% RH environment for 7 days to provide a type 3 dumbbell shaped test piece specified in JIS K6251. The breaking strength (MPa) and the elongation at break (%) of the test piece produced in this way were measured by applying a force to the test piece at a cross-head speed of 200 mm/min until the test piece broke. A method for calculating the elongation at break (%) is described below. The same measurement was performed in Examples 4 to 9.

The elongation at break (%) was calculated from the following formula.

$$\text{Elongation at break (\%)} = ((\text{length of test piece at break}) - (\text{length of test piece before test}))/(\text{length of test piece before test}) \times 100$$

(Dynamic Mechanical Analysis (DMA) Measurement)

The adhesive according to Example 3 was uniformly charged into a mold having a depth of 2 mm, cured at 80°C for 30 minutes, and further matured in a 23°C, 50% RH environment for 7 days to provide a test piece for DMA measurement. The storage modulus (E') of the resulting test piece was measured with a dynamic viscoelastic measurement (DMA) apparatus (DMS6100, available from Seiko Instruments Inc.) under the conditions below. The same measurement was performed in Examples 4 to 9. Table 2 presents the storage moduli at ordinary temperature (in a 23°C environment).

(Conditions for DMA Measurement)

Measurement frequency: 1 Hz, measurement mode: tension, rate of temperature increase: 5 °C/min

As can be seen from Table 2, each of the adhesives according to Examples 3 to 9 had satisfactory breaking strength, elongation at break, and dynamic viscoelastic properties (storage modulus).

(Examples 10 to 15)

Mixing materials were mixed in mixing proportions given in Table 3 to prepare adhesives. Specifically, the materials for formulation A were weighed and provided so as to have the mixing proportions given in Table 3. These were mixed and stirred, thereby preparing the adhesives according to Examples 10 to 15.

[Table 3]

| Material name | | Example | | | | | |
|---|---|---|---|---|---|---|---|
| | | 10 | 11 | 12 | 13 | 14 | 15 |
| Formulation A | jER 828 | 30 | 30 | 30 | 30 | 30 | 30 |
| | Crosslinkable silicon group-containing (meth)acrylic polymer | 28 | 28 | 28 | 28 | 28 | 28 |
| | SAX575 | 42 | 42 | 42 | 42 | 42 | 42 |
| | Sylophobic 200 | 5 | 5 | 5 | 5 | 5 | 5 |
| | SP 30 | - | 20 | - | - | - | - |
| | TS 720 | 6 | 6 | - | 4 | 6 | 4 |
| | Reolosil QS 20 | - | - | 6 | 2 | - | - |
| | BYK-405 | - | - | - | - | 2 | - |
| Evaluation | Yield stress (Pa) | 97.45 | 99.42 | 72.01 | 69.8 | 75.25 | 33.15 |
| | Rating | ○ | ○ | ○ | ○ | ○ | ○ |

In Table 3, the amounts of the mixing materials were expressed in units of "parts by mass". Although details of the mixing materials are listed below, the explanation is omitted for the same compounds as the mixing materials described in Table 1 or 2.

- TS 720: hydrophobic fumed silica, available from Cabot Corporation
- Reolosil QS 20: hydrophilic fumed silica, available from Tokuyama Corporation
- BYK-405: a solution of polycarboxylic acid amides, available from BYK

(Shape Retention Test)

The adhesive according to Example 10 was subjected to a shape retention test. Specifically, in the test, an "RST-CPS" rheometer (available from Brookfield) equipped with a 25-mm-diameter parallel plate sensor was used. The measurement temperature was 23°C, and the measurement gap was set to 0.100 mm. The test procedure is described below. In Examples 11 to 15, the test was also performed in the same manner.

(Step 1) Measurement is performed at a shear rate of 10 (1/s) for 60 seconds and reset.
(Step 2) Measurement is performed at shear rates of 1 (1/s), 2 (1/s), 3 (1/s), 4 (1/s), 5 (1/s), 6 (1/s), 7 (1/s), 8 (1/s), 9 (1/s), and 10 (1/s), in that order, for 20 seconds each (ascending path).
(Step 3) Measurement is performed at shear rates of 10 (1/s), 9 (1/s), 8 (1/s), 7 (1/s), 6 (1/s), 5 (1/s), 4 (1/s), 3 (1/s), 2 (1/s), and 1 (1/s), in that order, for 20 seconds each (descending path).

A Casson plot is drawn by plotting the square root of the shear stress versus the square root of the shear rate in the (descending path) (the vertical axis: the square root of the shear stress, and the horizontal axis: the square root of the shear rate). An approximate line is determined by the method of least squares from the Casson plot and plotted. The square of the point of intersection of the approximate line and the vertical axis is calculated as the yield stress.

In the case where the yield stress was 25 Pa or more, the adhesive was rated as "O". In the case where the yield stress was less than 25 Pa, the adhesive was rated as "×".

The results presented in Table 3 indicated that each of the adhesives according to the examples had a yield stress of 25 Pa or more and satisfactory shape retainability.

(Examples 16 to 24)

Mixing materials were mixed in mixing proportions given in Table 4 to prepare adhesives. Specifically, the materials were weighed and provided so as to have the mixing proportions given in Table 4. These were mixed and stirred, thereby preparing the adhesives according to Examples 16 to 24.

[Table 4]

| | | | Example | | | | | | | | |
|---|---|---|---|---|---|---|---|---|---|---|---|
| | | | 16 | 17 | 18 | 19 | 20 | 21 | 22 | 23 | 24 |
| Adhesive | Formulation A | jER 828 | 30 | 30 | 30 | 30 | 30 | 15 | 15 | 15 | - |
| | | HP 4032SS | - | - | - | - | - | 15 | 7.5 | - | - |
| | | HP 4700 | - | - | - | - | - | - | 7.5 | - | - |
| | | HP 6000 | - | - | - | - | - | - | - | 15 | - |
| | | Modified epoxy resin having siloxane bond | - | - | - | - | - | - | - | - | 30 |
| | | Neostann U-810 | 0.3 | 0.3 | 0.3 | 0.3 | 0.3 | 0.3 | 0.3 | 0.3 | 0.3 |
| | | Water | 0.5 | 0.5 | 0.5 | 0.5 | 0.5 | 0.5 | 0.5 | 0.5 | 0.5 |
| | | Sylophobic 200 | 5 | 5 | 5 | 5 | 5 | 5 | 5 | 5 | 5 |
| | Formulation B | Crosslinkable silicon group-containing (meth)acrylic polymer | 28 | 28 | 28 | 28 | 28 | 28 | 28 | 28 | 28 |
| | | SAX575 | 42 | 42 | 42 | 42 | 42 | 42 | 42 | 42 | 42 |
| | | Versamine EH 30 | 4 | 7 | 4 | 4 | 4 | 4 | 4 | 4 | 4 |
| | | KBM 603 | 2 | 2 | 2 | 2 | 2 | 2 | 2 | 2 | 2 |
| | | TS 720 | 6 | 6 | 6 | 6 | 6 | - | - | - | - |
| | | Ryton A5 | - | - | 20 | - | - | - | - | - | - |
| | | LS-210B | - | - | - | 20 | - | - | - | - | - |
| | | SP 30 | - | - | - | - | 20 | - | - | - | - |
| Evaluation | Storage modulus at 120°C (MPa) | | 15 | 22 | 25 | 20 | 22 | 29 | 27 | 29 | 23 |

In Table 4, the amounts of the mixing materials were expressed in units of "parts by mass". Although details of the mixing materials are listed below, the explanation is omitted for the same compounds as the mixing materials described in any of Tables 1 to 3.

- HP 4032SS: an epoxy resin having a naphthalene skeleton, available from DIC Corporation
- HP 4700: an epoxy resin having a naphthalene skeleton, available from DIC Corporation
- HP 6000: an epoxy resin having a naphthylene ether skeleton, available from DIC Corporation
- Modified epoxy resin with siloxane bond: the modified epoxy resin having a siloxane bond prepared in Synthesis example 3

(Storage Modulus at High Temperature)

The adhesive according to Example 16 was uniformly charged into a mold having a depth of 2 mm, cured at 80°C for 30 minutes, and further matured in a 23°C, 50% RH environment for 7 days to provide a test piece for DMA measurement. The storage modulus of the resulting test piece was measured with a dynamic viscoelastic measurement (DMA) apparatus (DMS6100, available from Seiko Instruments Inc.) under the conditions below. The same measurement was performed in Examples 17 to 24. Table 4 presents the storage moduli in a 120°C environment used for the measurement.

Measurement frequency: 1 Hz, measurement mode: tension, rate of temperature increase: 5 °C/min

As can be seen from Table 4, each of the adhesives according to the examples had satisfactory storage modulus even at a high temperature (120°C).

Table 5 presents the measurement results of the tensile moduli of the adhesives according to Example 1 and Comparative examples 1 and 2. The adhesives according to Comparative examples 1 and 2 were prepared by mixing the mixing materials in mixing proportions given in Table 5. Specifically, the materials were weighed and provided so

as to have the mixing proportions given in Table 5. These were mixed and stirred, thereby preparing the adhesives according to Comparative examples 1 and 2. The mixing materials listed in Table 5 are the same as the mixing materials listed in Tables 1 to 4.

[Table 5]

| | | | Example 1 | Comparative example 1 | Comparative example 2 |
|---|---|---|---|---|---|
| Adhesive | Formulation A | jER 828 | 30 | 30 | - |
| | | Neostann U-810 | 0.3 | - | 0.3 |
| | | Water | 0.5 | - | 0.5 |
| | | Sylophobic 200 | - | 5 | 5 |
| | Formulation B | Crosslinkable silicon group-containing (meth)acrylic polymer | 28 | - | 28 |
| | | SAX575 | 42 | - | 42 |
| | | Versamine EH 30 | 4 | 4 | - |
| | | KBM 603 | 2 | - | 2 |
| Evaluation | Tensile modulus (MPa) | After 10 minutes | 3.6 | 49.3 | 0.4 |
| | | After 24 hours | 24.3 | 47.0 | 1.4 |
| | Rating | | ○ | × | × |

(Measurement of Tensile modulus)

The tensile modulus was measured as follows: The adhesive according to Example 1 was applied to a first adherend composed of aluminum (A1100) having a purity of 99% or more at a size of 5 mm × 25 mm with a spacer having a thickness of 2 mm. A second adherend composed of aluminum (A1100) was attached thereto so as to sandwich the adhesive. In this state, the resulting assembly was cured at 80°C for 30 minutes. Immediately after the assembly was allowed to stand for 10 minutes or 24 hours in a 23°C, 50% RH environment subsequent to the curing, the tensile lap-shear strength was measured at a test rate of 50 mm/min in a 23°C environment according to JIS K6850 "Determination of tensile lap-shear strength of rigid-to-rigid bonded assemblies". The tensile modulus in a strain range of 0 to 2 was calculated using the resulting S-S curve. In Comparative examples 1 and 2, the test was also performed in the same manner. In the case where the rate of increase in tensile modulus after 24 hours with respect to the tensile modulus after 10 minutes was five or more times, the adhesive was rated as "O". In the case where the rate of increase was less than five times, the adhesive was rated as "×".

As can be seen from Table 5, in Example 1, the rate of increase in tensile modulus after 24 hours with respect to the tensile modulus after 10 minutes was five or more times.

While the embodiments and examples of the present invention have been described above, the above-mentioned embodiments and the examples are not intended to limit the invention according to the scope of the claims. It should be noted that all of the features and the combinations thereof described in the embodiments and the examples are not necessarily essential to means for solving the problems of the invention and that various changes can be made without departing from the technical scope of the invention.

## Claims

1. A bonding method for bonding a first adherend and a second adherend different from the first adherend with an adhesive, the adhesive containing:
a crosslinkable silicon group-containing polyoxyalkylene-based polymer, a crosslinkable silicon group-containing (meth)acrylic polymer, and an epoxy resin, the method comprising:

    an application step of applying the adhesive to at least one of the first adherend and the second adherend;
    a bonding step of bonding the second adherend to the first adherend with the adhesive to form a structure; and

a heating step of heating the resulting structure to cure the adhesive,
wherein after the heating step, in the case where the structure is matured at ordinary temperature, the adhesive has a storage modulus that increases as a maturing time elapses.

**2.** The bonding method according to Claim 1, wherein the first adherend and the second adherend have different coefficients of linear expansion, and
the storage modulus of the adhesive until the structure is brought to ordinary temperature in an ordinary temperature environment after the heating step is lower than the storage modulus of the adhesive at ordinary temperature after the structure is matured for 24 hours in the ordinary temperature environment after the heating step.

**3.** The bonding method according to Claim 1 or 2, wherein the adhesive further contains a porous additive.

**4.** The bonding method according to any one of Claims 1 to 3, wherein the epoxy resin is contained in an amount of 10 parts by mass or more and 300 parts by mass or less based on 100 parts by mass of a total of the crosslinkable silicon group-containing polyoxyalkylene-based polymer and the crosslinkable silicon group-containing (meth)acrylic polymer, and
when the adhesive is cured at 80°C for 30 minutes, the adhesive has an adhesive strength of 1 MPa or more, the adhesive strength being measured according to JIS K6850.

**5.** The bonding method according to any one of Claims 1 to 4, wherein the storage modulus of the adhesive at ordinary temperature after the structure is matured for 24 hours in an ordinary temperature environment after the heating step is 1.5 or more times the storage modulus of the adhesive until the structure is brought to ordinary temperature in the ordinary temperature environment after the heating step.

**6.** The bonding method according to any one of Claims 1 to 5, wherein the adhesive has shape retainability, and
in the application step, the adhesive is applied to at least one of the first adherend and the second adherend to an application thickness of 0.1 mm or more.

**7.** The bonding method according to any one of Claims 1 to 6, wherein after the bonding step, the adhesive on the structure has a thickness of 0.1 mm or more.

**8.** The bonding method according to any one of Claims 1 to 7, wherein regarding the adhesive,
after the adhesive is cured by heating at 80°C for 30 minutes and then matured in a 23°C, 50% RH environment for 24 hours, the adhesive has a storage modulus of 30 MPa or more, the storage modulus being measured according to JIS K7244-1,
the adhesive has an elongation of 50% or more in a 23°C environment, the elongation being measured according to JIS K6251,
a retention of elongation measured in a -40°C environment with respect to the elongation in the 23°C environment is 20% or more,
after the adhesive is matured in a 23°C, 50% RH environment for 24 hours, the adhesive has a storage modulus of 20 MPa or more, the storage modulus being measured according to JIS K7244-1 in a 120°C environment at a frequency of 1 Hz, and
the adhesive has a hot strength of 3.0 MPa or more, the hot strength being measured according to JIS K6850.

**9.** A cured product obtained by the bonding method according to any one of Claims 1 to 8.

**10.** An adhesive used to bond adherends having different coefficients of linear expansion, comprising:

a crosslinkable silicon group-containing polyoxyalkylene-based polymer;
a crosslinkable silicon group-containing (meth)acrylic polymer;
an epoxy resin; and
a porous additive,
wherein the epoxy resin is contained in an amount of 10 parts by mass or more and 300 parts by mass or less based on 100 parts by mass of a total of the crosslinkable silicon group-containing polyoxyalkylene-based polymer and the crosslinkable silicon group-containing (meth)acrylic polymer.

**11.** A cured product obtained by using the adhesive according to Claim 10.

[FIG. 1]

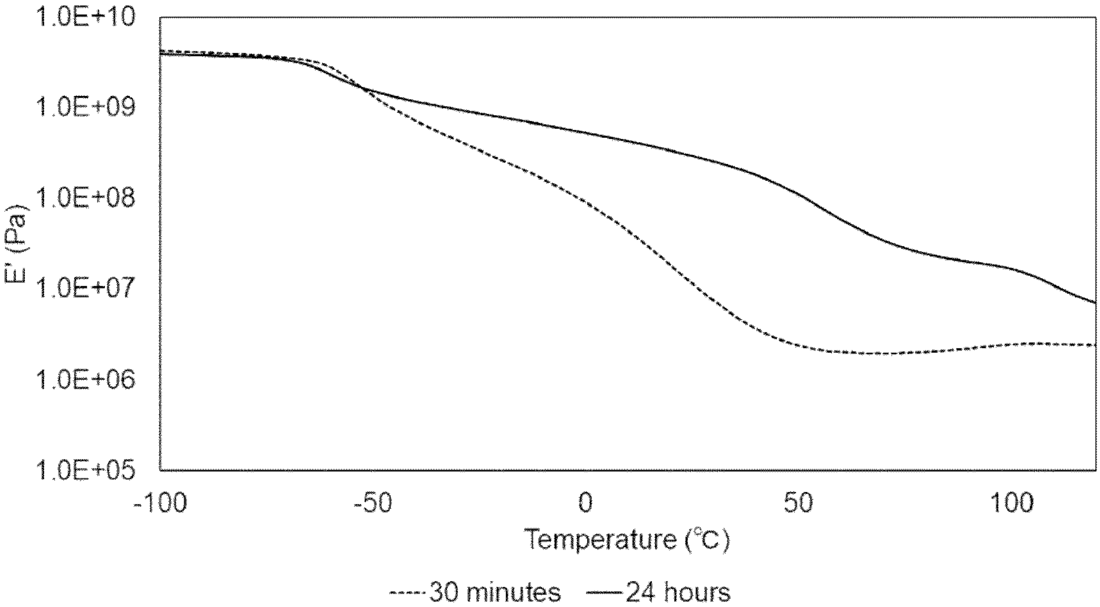
1.0E+10
1.0E+09
1.0E+08
1.0E+07
1.0E+06
1.0E+05
E' (Pa)
-100
-50
0
50
100
Temperature (°C)
30 minutes
24 hours

**INTERNATIONAL SEARCH REPORT**

International application No. PCT/JP2019/021379

A. CLASSIFICATION OF SUBJECT MATTER
Int.Cl. C09J5/06(2006.01)i, C09J11/02(2006.01)i, C09J133/00(2006.01)i, C09J163/00(2006.01)i, C09J171/02(2006.01)i, C09J183/12(2006.01)i

According to International Patent Classification (IPC) or to both national classification and IPC

B. FIELDS SEARCHED

Minimum documentation searched (classification system followed by classification symbols)
Int.Cl. C09J5/06, C09J11/02, C09J133/00, C09J163/00, C09J171/02, C09J183/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-222007 A (SEKISUI FULLER CO., LTD.) 10 December 2015, claims, paragraphs [0004], [0023], [0025], [0038], [0039], examples (Family: none) | 1-2, 4-9<br>1-11 |
| X<br>Y | JP 2004-323589 A (KANEGAFUCHI CHEM IND CO., LTD.) 18 November 2004, claims, paragraphs [0076], [0078]-[0080], [0086], examples (Family: none) | 9-11<br>1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17.06.2019 | Date of mailing of the international search report<br>02.07.2019 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2019/021379

C (Continuation). DOCUMENTS CONSIDERED TO BE RELEVANT

| Category* | Citation of document, with indication, where appropriate, of the relevant passages | Relevant to claim No. |
|---|---|---|
| A | JP 03-193185 A (KUMABE, Kiyoshi) 22 August 1991, page 2, upper right column to lower left column (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002309077 A
- WO 2015088021 A
- JP 2000086998 A
- JP 2010275411 A
- JP 5569703 B
- JP 2009215330 A


### Non-patent literature cited in the description


- Shin Epokishi Jushi (New Epoxy Resin). *Showa,* 10 May 1985, vol. 60, 537